# EUROPÄISCHE PATENTSCHRIFT

(11) **EP 2 114 721 B1**
(45) Veröffentlichungstag und Bekanntmachung des Hinweises auf die Patenterteilung: **01.04.2015**
(21) Anmeldenummer: 08707830.9
(22) Anmeldetag: 07.01.2008
(51) Int. Cl.: B60M 1/26

(54) **VORRICHTUNG ZUM ERKENNEN EINES MECHANISCHEN DEFEKTS IN EINEM DRAHT EINER OBERLEITUNG**
DEVICE FOR RECOGNISING A MECHANICAL DEFECT IN A WIRE OF AN OVERHEAD LINE
DISPOSITIF DE DÉTECTION D'UN DÉFAUT MÉCANIQUE DANS UN CÂBLE D'UNE LIGNE AÉRIENNE

(30) Priorität: 06.02.2007 DE 102007005859
(43) Veröffentlichungstag der Anmeldung: 11.11.2009
(73) Patentinhaber: Siemens Aktiengesellschaft, 80333 München (DE)
(72) Erfinder: BECHMANN, Jürgen, 96172 Mühlhausen (DE); DÖLLING, André, 91056 Erlangen (DE); SCHMIEDER, Axel, 04288 Leipzig (DE); SEMRAU, Manfred, 06110 Halle (DE)
(86) Internationale Anmeldenummer: PCT/EP2008/050095
(87) Internationale Veröffentlichungsnummer: WO 2008/095739

(56) Entgegenhaltungen:
- DE-A1- 10 345 508
- DE-A1- 19 854 369
- JP-A- 9 288 023
- JP-A- 11 208 320
- JP-A- S63 305 262
- JP-A- 2003 348 723

## Beschreibung

Die Erfindung betrifft eine Vorrichtung zum Erkennen eines mechanischen Defekts in einem Draht einer Oberleitung.

Diese Oberleitung, die insbesondere für den Bahnbetrieb dient, kann auch als Oberleitungskettenwerk ausgebildet sein. Der Draht kann sowohl der Fahrdraht als auch das Tragseil sein.

Wenn eine stromführende Leitung, weil sie zum Beispiel gerissen ist, mit einem geerdeten Bauteil, einer geerdeten Leitung eines Oberleitungskettenwerkes oder einer Rückleitung zu einem Unterwerk in Kontakt kommt, muss die Energieversorgung der Oberleitung abgeschaltet werden, damit Personen nicht gefährdet werden können.

Bisher war es üblich, mit einer geeigneten Vorrichtung einen Kurzschlussstrom zu detektieren, um dann die Energieversorgung, z. B. in einem Unterwerk, abzuschalten, wenn ein zu hoher Kurzschlussstrom auftritt. Eine derartige Vorrichtung arbeitet nicht immer zuverlässig genug, so dass die Abschaltung der Energieversorgung manchmal unterbleibt, obwohl geerdete Bauteile und Leitungen von einem zu hohen Strom durchflossen sind. Dadurch werden Personen gefährdet. Das gilt besonders dann, wenn eine nicht abgeschaltete Oberleitung durch den Stromabnehmer eines Zuges abgerissen wird. Besonders in einem Tunnel kann das zu einem Brand führen. Es kann auch vorkommen, dass nach einem Kurzschluss eine zu frühe Zuschaltung der Energieversorgung erfolgt, was ebenfalls Personen gefährdet.

Ein Draht eines Oberleitungskettenwerkes, beispielsweise ein Fahrdraht oder ein Tragseil, hat eine bestimmte Länge. Um einen reibungslosen Bahnbetrieb zu ermöglichen, überlappen sich die Drähte an ihrem Ende.

Ein Draht ist an einem ersten Stützpunkt über einen Isolator starr befestigt. An seinem anderen Ende steht er jedoch über eine Nachspanneinrichtung mit einem zweiten Stützpunkt in Verbindung. Eine solche Nachspanneinrichtung ist beispielsweise aus der DE 297 13 425 U1 bekannt. Diese Nachspanneinrichtung umfasst ein Spannrad, das über eine bewegliche Wippe am Stützpunkt, der z. B. ein Mast ist, befestigt ist. Der zu spannende Draht endet am Spannrad. Um die gewünschte Spannung im Draht zu gewährleisten, wirkt ein Drehmoment auf das Spannrad. Das Drehmoment wird hervorgerufen durch ein vom Umfang des Spannrades ausgehendes Seil, das durch Gewichtskörper nach unten gezogen wird.

Weiterhin ist aus der Druckschrift JP 633 05 262 eine gattungsgemäße Vorrichtung bekannt.

Der Erfindung liegt die Aufgabe zugrunde, ausgehend von der JP 633 05 262 eine Vorrichtung zum Erkennen eines mechanischen Defekts in einem Draht einer Oberleitung anzugeben, die zuverlässig einen Hinweis auf einen Defekt gibt, bevor der Draht reißt und stromführende Bauteile und Leitungen mit geerdeten Bauteilen und Leitungen in Kontakt kommen, was für Personen gefährlich ist.

Die Aufgabe wird durch die Merkmale des Anspruchs 1 der vorliegenden Erfindung gelöst.

Mit Zugkraft ist diejenige Kraft gemeint, mit der der gespannte Draht am Stützpunkt zieht. Der Stützpunkt ist beispielsweise ein Mast. Der Draht kann direkt am Stützpunkt oder an einem mit dem Stützpunkt mechanisch verbundenen Bauteil enden.

Mit der Vorrichtung nach der Erfindung wird der Vorteil erzielt, dass nicht erst dann, wenn ein Draht gerissen ist oder sogar ein stromführender Draht mit einem geerdeten Draht in Kontakt kommt, ein Defekt erkannt wird, sondern dass bereits ein mechanischer Schaden am Draht, der zunächst nicht direkt zu erkennen ist, festgestellt werden kann. Es kann sich bei dem Defekt nur um einen relativ kleinen Riss im Draht handeln, der sich aber bereits auf die Zugkraft im Draht auswirkt. Es werden vorteilhaft sehr kleine Defekte am Draht festgestellt.

Falls ein Defekt erkannt worden ist, kann er angezeigt werden, so dass schnell Maßnahmen gegen eine mögliche bevorstehende Gefahr getroffen werden können. Beispielsweise kann nach dem Erkennen eines Defekts automatisch der ganze Abschnitt der Oberleitung, z. B. in einem Unterwerk, stromlos geschaltet werden. Es wird der Vorteil erzielt, dass ein sich abzeichnender größerer Defekt frühzeitig zu erkennen ist. Gefährdungen von Personen durch stromführende, insbesondere abgerissene stromführende Leitungen aufgrund eines Defekts sind ausgeschlossen.

Nach der vorliegenden Erfindung ist als Einrichtung zur Bestimmung der Zugkraft des Drahtes ein Drehwinkelmesser zwischen einem zweiten Stützpunkt und einer an ihm angebrachten beweglichen Wippe, die ein Spannrad trägt, an dem der Draht endet, angeordnet und der Drehwinkelmesser ist mit einer Auswerteeinheit verbunden zum Bestimmen der Zugkraft des Drahtes aus dem gemessenen Drehwinkel.

Es existiert nämlich ein funktionaler Zusammenhang zwischen der Zugkraft des Drahtes und dem Winkel, den die bewegliche Wippe mit dem zweiten Stützpunkt, der beispielsweise ein Mast ist, einnimmt.

Die Stellung der Wippe relativ zum zweiten Stützpunkt ist gegeben durch die Zugkraft des Drahtes und durch die Gewichtskraft des Gewichtskörpers der Nachspanneinrichtung. Falls bedingt durch einen Defekt im Draht, z. B. durch einen Riss im Draht, der den Draht noch nicht vollständig zerstört, die Zugkraft nachlässt, überwiegt momentan die Gewichtskraft, so dass sich die Wippe nach unten bewegt und einen verkleinerten Winkel mit dem Stützpunkt, z. B. mit dem Mast, einnimmt.

Es wird der Vorteil erzielt, dass durch eine einfache Bestimmung eines Winkels zwischen zwei Bauteilen die Zugkraft des Drahtes bestimmt werden kann, die einen Hinweis darauf gibt, ob der Draht einen Defekt, z. B. einen Riss, hat.

Zusätzlich kann als weitere Einrichtung zur Bestimmung der Zugkraft des Drahtes ein Positionsmesser einem Gewichtskörper zugeordnet sein, der mit einem Spannrad, an dem der Draht endet, verbunden ist. Der Positionsmesser ist mit einer Auswerteeinheit verbunden zum Bestimmen der Zugkraft des. Drahtes aus der gemessenen Position des Gewichtskörpers. Die Auswerteeinrichtung dient zum Vergleichen der Zugkräfte mit Sollwerten und zum Anzeigen eines mechanischen Defekts bei gleichzeitigem Unterschreiten des jeweiligen Sollwertes durch mindestens zwei Zugkräfte.

Falls die Zugkraft des Drahtes durch einen Defekt, wie z. B. einem Riss, nachlässt, lässt auch die Kraft des Drahtes auf das Spannrad nach, so dass sich der Gewichtskörper nach unten bewegt. Diese Positionsveränderung des Gewichtskörpers dient dazu, in einer Auswerteeinheit über einen gegebenen funktionalen Zusammenhang die Zugkraft des Drahtes zu bestimmen.

Zusätzlich kann als weitere Einrichtung zur Bestimmung der Zugkraft des Drahtes eine Kraftmessdose zwischen dem Draht und einem ersten Stützpunkt, an dem der Draht endet, angeordnet sein. Eine Kraftmessdose, die Kräfte messen kann, ist als solche bekannt. Durch die genannte Anordnung der Kraftmessdose wird der Vorteil erzielt, dass die Kraft, mit der der zu überwachende Draht am ersten Stützpunkt zieht, stets zuverlässig überwacht werden kann.

Zusätzlich kann als weitere Einrichtung zur Bestimmung der Zugkraft des Drahtes eine Kraftmessdose zwischen dem Draht und einem von einem zweiten Stützpunkt gehaltenen Spannrad, an dem der Draht endet, angeordnet sein- Auch mit dieser Anordnung wird der Vorteil erzielt, dass die Kraft, mit der der zu überwachende Draht am Spannrad und damit indirekt am zweiten Stützpunkt zieht, überwacht werden kann.

Es ist also möglich, die Zugkraft des Drahtes sowohl an seinem einen Ende als auch an seinem anderen Ende zu messen und zu überwachen, so dass eine größere Genauigkeit erzielt wird.

Sowohl eine Kraftmessdose als auch ein Drehwinkelmesser und auch ein Positionsmesser sind handelsübliche, bekannte Bauteile.

Der Positionsmesser ist beispielsweise ein berührungslos arbeitender Infrarotdetektor, der einfach zu montieren ist.

Die zusätzlichen, zur Erfindung unterschiedlichen Ausführungsformen der Vorrichtung zum Erkennen eines mechanischen Defekts können also gleichzeitig an einem Draht eingesetzt sein. Wenn mindestens zwei unterschiedliche Einrichtungen vorhanden sind, kann also vorgesehen sein, dass nur dann ein mechanischer Defekt angezeigt wird, wenn mindestens zwei Einrichtungen einen Hinweis auf einen Defekt geben. Damit wird der Vorteil erzielt, dass durch einen Messfehler bewirkte Hinweise auf mechanische Defekte am Draht weitgehend vermieden werden. Erst wenn zwei unterschiedliche Messungen getrennt voneinander einen Defekt vermuten lassen, wird auch ein solcher Defekt angezeigt.

Alle Ausführungsformen der Vorrichtung zum Erkennen eines mechanischen Defekts in einem Draht einer Oberleitung ermöglichen vorteilhaft ein schnelles und zuverlässiges Erkennen eines Defekts im Draht. Die unterschiedlichen Ausführungsformen, soweit mindestens eine davon die Erfindung nach Anspruch 1 betrifft, können auch gleichzeitig an einem Draht eingesetzt sein.

Mit der Vorrichtung zum Erkennen eines mechanischen Defekts in einem Draht nach der Erfindung wird insbesondere der Vorteil erzielt, dass bereits ein kleiner Riss im Draht erkannt werden kann. Ein Defekt ist also lange bevor es zu einer Zerstörung des Drahtes kommt sicher zu erkennen. Die Gefährdung von Personen durch stromführende Bauteile nach einem Defekt ist weitgehend ausgeschlossen.

## Patentansprüche

1. Vorrichtung zum Erkennen eines mechanischen Defekts in einem Draht einer Oberleitung, wobei mit dem Draht und einem Stützpunkt eine Einrichtung zur Bestimmung der Zugkraft des Drahtes in Verbindung steht, wobei die Einrichtung mit einer Auswerteeinrichtung zum Vergleichen der Zugkraft mit einem Sollwert und zum Anzeigen eines mechanischen Defekts bei Unterschreiten des Sollwertes verbunden ist,
**dadurch gekennzeichnet,** dass als Einrichtung zur Bestimmung der Zugkraft des Drahtes ein Drehwinkelmesser zwischen einem zweiten Stützpunkt und einer an ihm angebrachten beweglichen Wippe, die ein Spannrad trägt, an dem der Draht endet, angeordnet ist und dass der Drehwinkelmesser mit einer Auswerteeinheit verbunden ist zum Bestimmen der Zugkraft des Drahtes aus dem gemessenen Drehwinkel.

2. Vorrichtung nach Anspruch 1, **dadurch gekennzeichnet, dass** mindestens eine weitere, unterschiedliche Einrichtungen zur Bestimmung der Zugkraft des Drahtes mit der Auswerteeinrichtung zum Vergleichen der Zugkräfte mit Sollwerten und zum Anzeigen eines mechanischen Defekts bei gleichzeitigem Unterschreiten des jeweiligen Sollwertes durch mindestens zwei Zugkräfte verbunden sind.

3. Vorrichtung nach Anspruch 2 **dadurch gekennzeichnet, dass** als weitere Einrichtung zur Bestimmung der Zugkraft des Drahtes eine Kraftmessdose zwischen dem Draht und dem ersten Stützpunkt, an dem der Draht endet, angeordnet ist.

4. Vorrichtung nach einem der Ansprüche 2 oder 3, **dadurch gekennzeichnet, dass** die mindestens eine weitere Einrichtung zur Bestimmung der Zugkraft des Drahtes eine Kraftmessdose zwischen dem Draht und einem von dem zweiten Stützpunkt gehaltenen Spannrad, an dem der Draht endet, angeordnet ist.

5. Vorrichtung nach einem der Ansprüche 2 bis 4, **dadurch gekennzeichnet, dass** die mindestens eine weitere Einrichtung zur Bestimmung der Zugkraft des Drahtes ein Positionsmesser einem Gewichtskörper zugeordnet ist, der mit einem Spannrad, an dem der Draht endet, verbunden ist, und dass der Positionsmesser mit der Auswerteeinheit verbunden ist zum Bestimmen der Zugkraft des Drahtes aus der gemessenen Position des Gewichtskörpers.

6. Vorrichtung nach einem der Ansprüche 1-5, **dadurch gekennzeichnet, dass** der Positionsmesser ein berührungslos arbeitender Infrarotdetektor ist.

## Claims

1. Apparatus for recognition of a mechanical defect in a wire of an overhead line, with a device for determining the tensile force in the wire being connected to the wire and to a supporting point, the device being connected to an evaluation device for comparison of the tensile force with a nominal value and for indication of a mechanical defect if the nominal value is undershot **characterized in that** a rotation angle gauge is arranged between a second supporting point and a moving rocker which is fitted to the supporting point and to which a tensioning wheel is fitted, at which the wire ends, as the device for determining the tensile force in the wire, and **in that** the rotation angle gauge is connected to an evaluation unit for determining the tensile force in the wire from the measured rotation angle.

2. Apparatus according to Claim 1, **characterized in that** at least one further different device for determining the tensile force in the wire is connected to the evaluation device for comparison of the tensile forces with nominal values and for indication of a mechanical defect when at least two tensile forces undershoot the respective nominal value at the same time.

3. Apparatus according to Claim 2, **characterized in that** a force transducer is arranged between the wire and a first supporting point, at which the wire ends, as the further device for determining the tensile force in the wire.

4. Apparatus according to one of Claims 2 or 3, **characterized in that** a force transducer is arranged between the wire and a tensioning wheel, which is held by the second supporting point and at which the wire ends, as the at least one further device for determining the tensile force in the wire.

5. Apparatus according to one of Claims 2 to 4, **characterized in that** a position gauge is associated with a weight body as the at least one further device for determining the tensile force in the wire and is connected to a tensioning wheel, at which the wire ends, and **in that** the position gauge is connected to the evaluation unit for determining the tensile force in the wire from the measured position of the weight body.

6. Apparatus according to one of Claims 1 to 5, **characterized in that** the position gauge is an infrared detector which operates in a non-contacting manner.

## Revendications

1. Dispositif de détection d'un défaut mécanique dans un fil d'une ligne de contact, dans lequel un dispositif de détermination de la force de traction du fil est en liaison avec le fil et avec un point d'appui, le dispositif étant relié à un dispositif d'évaluation pour comparer la force de traction à une valeur de consigne et pour indiquer un défaut mécanique, si, on passe en dessous de la valeur de consigne, **caractérisé en ce que**
il est monté, comme dispositif de détermination de la force de traction du fil, un appareil de mesure d'angle de rotation, entre un deuxième point d'appui et un archet mobile, qui est mis sur lui et qui porte une roue de tension, à laquelle le fil se termine, et **en ce que** l'appareil de mesure d'angle de rotation est relié à une unité d'évaluation pour la détermination de la force de traction du fil, à partir de l'angle de rotation mesuré.

2. Dispositif suivant la revendication 1, **caractérisé en ce qu'**au moins un autre dispositif différent de détermination de la force de traction du fil est relié au dispositif d'évaluation pour comparer les forces de traction à des valeurs de consigne et pour indiquer un défaut mécanique, si au moins deux forces de traction passent en même temps en dessous de la valeur de consigne respective.

3. Dispositif suivant la revendication 2, **caractérisé en ce qu'**il est monté, comme autre dispositif de détermination de la force de traction du fil, une boîte dynamométrique entre le fil et le premier point d'appui où le fil se termine.

4. Dispositif suivant l'une des revendications 2 ou 3, **caractérisé en ce que** le au moins un autre dispositif de détermination de la force de traction du fil est une boîte dynamométrique, montée entre le fil et une roue de tension, qui est maintenue par le deuxième point d'appui et où le fil se termine.

5. Dispositif suivant l'une des revendications 2 à 4, **caractérisé en ce que**, comme au moins un autre dispositif de détermination de la force de traction du fil, un appareil de mesure de position est associé à une masselotte, qui est reliée à une roue de tension où se termine le fil, et **en ce que** l'appareil de mesure de position est relié à l'unité d'évaluation pour la détermination de la force de traction du fil, à partir de la mesure de position de la masselotte.

6. Dispositif suivant l'une des revendications 1 à 5, **caractérisé en ce que** l'appareil de mesure de position est un détecteur d'infrarouge fonctionnant sans contact.
